(19) Europäisches Patentamt / European Patent Office / Office européen des brevets

(11) **EP 4 429 093 A1**

(12) **EUROPEAN PATENT APPLICATION**
published in accordance with Art. 153(4) EPC

(43) Date of publication:
**11.09.2024 Bulletin 2024/37**

(21) Application number: **22889792.2**

(22) Date of filing: **20.10.2022**

(51) International Patent Classification (IPC):
**H02M 3/28** (2006.01)

(52) Cooperative Patent Classification (CPC):
**H02M 3/28; H02M 7/48**

(86) International application number:
**PCT/JP2022/039143**

(87) International publication number:
**WO 2023/079972 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.11.2021 JP 2021179716**

(71) Applicant: **OMRON Corporation**
**Kyoto 600-8530 (JP)**

(72) Inventor: **ISHII, Takanori**
**Kyoto-shi, Kyoto 600-8530 (JP)**

(74) Representative: **HGF**
**HGF Limited**
**1 City Walk**
**Leeds LS11 9DX (GB)**

(54) **ISOLATED DC-DC CONVERSION DEVICE, CONTROL METHOD THEREFOR, AND POWER CONVERSION SYSTEM**

(57) An isolated DC-DC converter apparatus (2) includes: a first smoother including a capacitor (C1) configured to smooth an input voltage; a switching device (9) including an isolating transformer (TR), an inductor(L), a switching circuit (7) on a primary side of the isolating transformer (TR), and a switching circuit (8) on a secondary side of the isolating transformer, the switching device (9) configured to switch a smoothed voltage and convert power into a predetermined output voltage; a second smoother including a second capacitor (C2) configured to smooth the power-converted output voltage; and a controller (10) configured to control a preparation operation of the switching device before start of operation. The controller (10) controls the switching device (9) to adjust the input voltage and the output voltage such that an inductor current flowing through the inductor (L) becomes less than a predetermined upper limit value based on the input voltage and the output voltage in a preparation operation before the start of operation.

Fig. 12

```
            PRECHARGE CONTROL PROCESS
            (OVERVIEW CONTROL FLOW)

S11    OPERATE WITH MINIMUM STEP-DOWN PHASE SHIFT AMOUNT Tφmin.

S12    OPERATE IN STEP-DOWN SWITCHING (BUCK MODE) WITH PHASE
       SHIFT AMOUNT Tφ BY WHICH INDUCTOR CURRENT IL BECOMES
       MAXIMUM VALUE ILmax ACCORDING TO VOLTAGE DIFFERENCE
       BETWEEN INPUT VOLTAGE Vin AND OUTPUT VOLTAGE Vout.

S13            IS VOLTAGE OF
       SMOOTHING CAPACITOR WITHIN TARGET
YES              SETTING RANGE?
                        NO

S14              IS IT OPERATING
       IN STEP-DOWN SWITCHING (BUCK MODE) ?
NO
                       YES

S15            Tφ<Tφmax ?
NO
                       YES

S16    OPERATE IN STEP-UP SWITCHING (BOOST MODE) WITH PHASE
       SHIFT AMOUNT Tφ BY WHICH INDUCTOR CURRENT IL
       BECOMES MAXIMUM VALUE ILmax ACCORDING TO INPUT
       VOLTAGE Vin.

                       END
```

EP 4 429 093 A1

**Description**

TECHNICAL FIELD

The present invention relates to an isolated DC-DC converter apparatus, a control method therefor, and a power conversion system.

BACKGROUND ART

An isolated DC-DC converter apparatus of a conventional example includes switching circuits each including a plurality of switches on both sides of a transformer for electrical isolation, and smoothing capacitors on the outsides of the switching circuits. When there is a voltage potential difference between the pair of smoothing capacitors, there is such a problem that a large current flows during operation of the DC-DC converter apparatus and a component is broken. In order to solve this problem, it is necessary to adjust the voltage of the pair of smoothing capacitors as the operation before the start of operation, and for example, the voltage of the smoothing capacitors is lowered by being connected to charge consumption resistors via the switches at the time of discharging. In addition, at the time of charging, in order to prevent inrush current, the charge consumption resistors are connected via switches.

For example, Patent Document 1 discloses a power converter apparatus and a control method capable of starting an operation without generating an excessive current in components constituting a DC-DC converter even when there is a voltage difference between two capacitors. The power converter apparatus includes an isolated DC-DC converter that converts one DC power into the other DC power via AC power, and the isolated DC-DC converter includes a first capacitor connected to a first conduction path of the one DC power, a second capacitor connected to a second conduction path of the other DC power, and a first current limiting circuit that suppresses a current flowing through a third conduction path of the AC power. Specifically, in the power converter apparatus of Patent Document 1, when there is a voltage potential difference between an input smoother and an output smoother as preliminary charging before the start of operation, the switch of the current limiting circuit is turned off, and control is performed such that a current flows through a current limiter and the current is limited.

In addition, Patent Document 2 discloses a control circuit of an isolated DC-DC converter for safely charging a voltage of a capacitor while suppressing an inrush current during pre-charging without providing a current detection sensor or an overcurrent prevention circuit in the isolated DC-DC converter. The control circuit of the isolated DC-DC converter performs voltage control according to a deviation between a first capacitor voltage and a second capacitor voltage. Then, based on the result of the voltage control, gate signals of a plurality of semiconductor switch elements included in the isolated DC-DC converter are generated. Specifically, the control circuit of the isolated DC-DC converter of Patent Document 2 performs voltage control according to the voltage deviation between the input smoother and the output smoother as preliminary charging before the start of operation, and determines the phase difference to control the plurality of semiconductor switch elements so that overcurrent does not flow.

PRIOR ART DOCUMENTS

PATENT DOCUMENTS

Patent Document 1: JP2017-118806A
Patent Document 2: JP2021-078274A

SUMMARY OF THE INVENTION

PROBLEMS TO BE SOLVED BY THE INVENTION

However, in the isolated DC-DC converter apparatus of the conventional example, it is necessary to provide a charge consumption resistor and a switch, and there is such a problem that the size of the circuit increases and the circuit cost increases.

In addition, the power converter apparatus of Patent Document 1 has such a problem that it is necessary to provide the current limiting circuit, the size of the circuit increases, and the circuit cost increases.

Further, in the control circuit of the isolated DC-DC converter of Patent Document 2, there is such a problem that a control sequence of the control circuit becomes complicated and a process time when the control circuit is mounted on a microcomputer or the like becomes long.

An object of the present invention is to solve the above problems, and to provide an isolated DC-DC converter apparatus, a control method therefor, and a power conversion system capable of controlling a voltage of a smoothing capacitor in a relatively short time within a predetermined operation time with a simple configuration as compared with the prior art in a preparation operation of the isolated DC-DC converter apparatus before operation.

SOLUTIONS TO THE PROBLEMS

According to one aspect of the present disclosure, an isolated DC-DC converter apparatus is provided. The isolated DC-DC converter apparatus includes: a first smoother including a first capacitor configured to smooth an input voltage; a switching device including an isolating transformer, an inductor, a switching circuit on a primary side of the isolating transformer, and a switching circuit on a secondary side of the isolating transformer, the switching device configured to switch a smoothed voltage and convert power into a predetermined output voltage; a second smoother including a second capacitor configured to smooth the power-converted output voltage; and a controller configured to control a preparation operation of the switching device before start of operation. The controller controls the switching device to adjust the input voltage and the output voltage such that an inductor current flowing through the inductor becomes less than a predetermined upper limit value based on the input voltage and the output voltage in a preparation operation before the start of operation.

EFFECTS OF THE INVENTION

Therefore, according to the isolated DC-DC converter apparatus and the like according to an aspect of the present invention, the voltage of the smoothing capacitor can be controlled in a relatively short time within a predetermined operation time with a simple configuration as compared with the prior art in a preparation operation of the isolated DC-DC converter apparatus before operation.

BRIEF DESCRIPTION OF THE DRAWINGS

Fig. 1 is a block diagram showing a configuration example of a power conversion system according to an embodiment.
Fig. 2 is a circuit diagram showing a configuration example of the isolated DC-DC converter apparatus 2 of Fig. 1.
Fig. 3 is a flowchart showing a preparation process before start of operation executed by a controller 10 of Fig. 2.
Fig. 4A is a timing chart of each signal showing an operation example when an inductor current IL continues in step-up switching and synchronous rectification is performed in the isolated DC-DC converter apparatus 2 of Fig. 2.
Fig. 4B is a timing chart of each signal showing an operation example when the inductor current IL continues in the step-up switching and synchronous rectification is not performed in the isolated DC-DC converter apparatus 2 of Fig. 2.
Fig. 5A is a timing chart of each signal showing an operation example when the inductor current IL is discontinuous in the step-up switching and synchronous rectification is performed in the isolated DC-DC converter apparatus 2 of Fig. 2.
Fig. 5B is a timing chart of each signal showing an operation example when the inductor current IL is discontinuous in the step-up switching and synchronous rectification is not performed in the isolated DC-DC converter apparatus 2 of Fig. 2.
Fig. 6 is a timing chart of the inductor current IL when the inductor current IL has the maximum value and the inductor current IL is continuous in the step-up switching in the isolated DC-DC converter apparatus 2 of Fig. 2.
Fig. 7 is a timing chart of the inductor current IL when the inductor current IL has the maximum value and the inductor current IL is discontinuous in the step-up switching in the isolated DC-DC converter apparatus 2 of Fig. 2.
Fig. 8A is a timing chart of each signal showing an operation example when the inductor current IL continues in the step-down switching and synchronous rectification is performed in the isolated DC-DC converter apparatus 2 of Fig. 2.
Fig. 8B is a timing chart of each signal showing an operation example when the inductor current IL continues in the step-down switching and the synchronous rectification is not performed in the isolated DC-DC converter apparatus 2 of Fig. 2.
Fig. 9A is a timing chart of each signal showing an operation example when the inductor current IL is discontinuous in the step-down switching and synchronous rectification is performed in the isolated DC-DC converter apparatus 2 of Fig. 2.
Fig. 9B is a timing chart of each signal showing an operation example when the inductor current IL is discontinuous in the step-down switching and synchronous rectification is not performed in the isolated DC-DC converter apparatus 2 of Fig. 2.

Fig. 10 is a timing chart of the inductor current IL when the inductor current IL has the maximum value and the inductor current IL is continuous in the step-down switching in the isolated DC-DC converter apparatus 2 of Fig. 2.

Fig. 11 is a timing chart of the inductor current IL when the inductor current IL has the maximum value and the inductor current IL is discontinuous in the step-down switching in the isolated DC-DC converter apparatus 2 of Fig. 2.

Fig. 12 is a flowchart showing a pre-charge control process (overview control flow) executed by the controller 10 of Fig. 2.

Fig. 13 is a diagram showing a table of charge and discharge control modes executed by a switching device 9 of Fig. 2.

Fig. 14A is a flowchart showing a first part of the pre-charge control process (detailed control flow) executed by the controller 10 of Fig. 2.

Fig. 14B is a flowchart showing a second part of the pre-charge control process (detailed control flow) executed by the controller 10 of Fig. 2.

Fig. 14C is a flowchart showing a third part of the pre-charge control process (detailed control flow) executed by the controller 10 of Fig. 2.

Fig. 15 is a simulation result of the isolated DC-DC converter apparatus 2 of Fig. 2, and is a timing chart of each signal.

Fig. 16 is a block diagram showing a configuration example of a power conversion system according to a modified embodiment.

## DETAILED DESCRIPTION

Hereinafter, an embodiment and a modified embodiment according to the present invention will be described with reference to the drawings. It is noted that the same or similar components are denoted by the same reference numerals.

## EMBODIMENTS

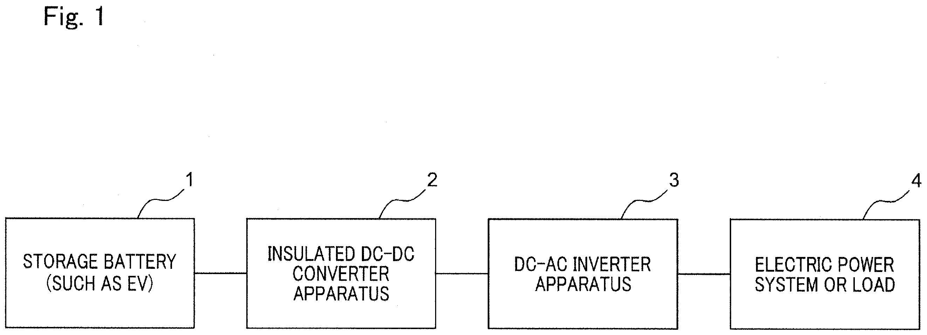

Fig. 1 is a block diagram showing a configuration example of a power conversion system according to the embodiment. In Fig. 1, the power conversion system according to the embodiment includes, for example, a storage battery 1 mounted on an electric vehicle (EV) or the like, an isolated DC-DC converter apparatus 2 that includes an isolation transformer and converts a DC voltage from the storage battery 1 into a predetermined DC voltage, and a DC-AC inverter apparatus 3 that converts the DC voltage from the isolated DC-DC converter apparatus 2 into an AC voltage by switching and outputs the AC voltage to a load of a power system or a load 4. In this case, the power system or the load 4 becomes the power system 4 during an interconnection operation, and becomes the load 4 during a self-sustaining operation.

Referring to Fig. 1, when the storage battery 1 is discharged, the isolated DC-DC converter apparatus 2 performs DC-AC conversion of a DC voltage output from the storage battery 1 into an AC voltage, and then AC-DC converts the AC voltage into a DC voltage and outputs the DC voltage, thereby constituting a so-called step-up and step-down converter apparatus. The DC-AC inverter apparatus 3 converts a DC voltage into an AC voltage, and outputs the AC voltage to the power system 4 during the interconnection operation, and outputs the AC voltage to the load 4 during the self-sustaining operation.

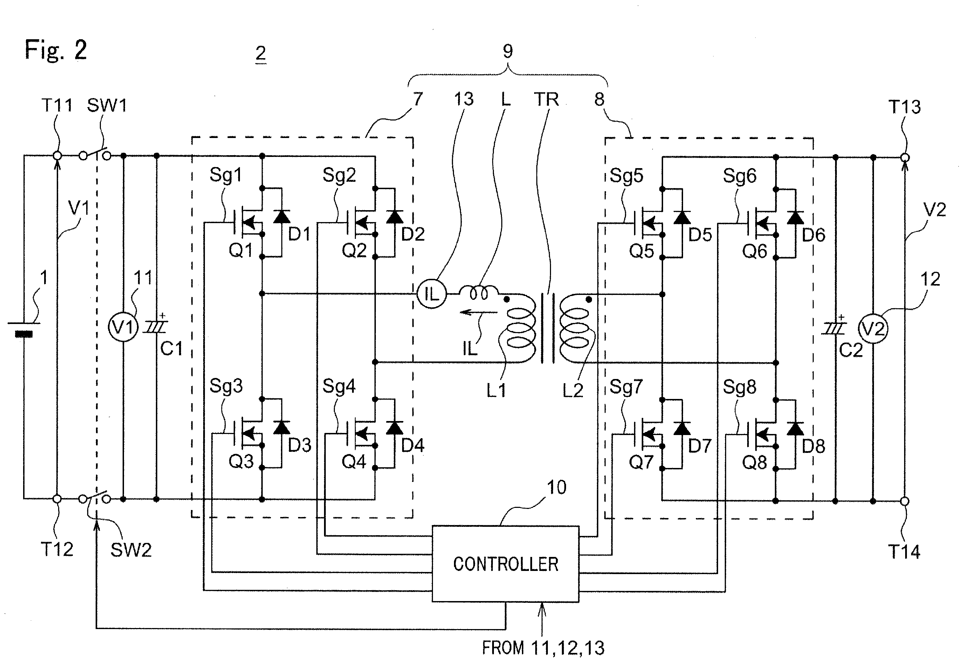

Fig. 2 is a circuit diagram showing a configuration example of the isolated DC-DC converter apparatus 2 of Fig. 1. Referring to Fig. 2, the isolated DC-DC converter apparatus 2 includes, between pairs of terminals T11 and T12 and T13 and T14:

(1) switches SW1 and SW2 controlled by a controller 10;
(2) a voltage detector 11 that detects a voltage V1 between the terminals T11 and T12 and outputs the detected voltage V1 to the controller 10;
(3) a smoothing capacitor C1 that is a first smoother;
(4) a switching device 9 including switching circuits 7 and 8, an inductor L, an isolating transformer TR having a primary winding L1 and a secondary winding L2, and a current detector 13;
(5) a smoothing capacitor C2 that is a second smoother; and
(6) a voltage detector 12 that detects a voltage V2 between the terminals T13 and T14 and outputs the detected voltage V2 to the controller 10.

In this case, the terminal T11 is connected to one end of the voltage detector 11, one end of the smoothing capacitor C1, and one end of the switching circuit 7 via the switch SW1, and the terminal T12 is connected to the other end of the voltage detector 11, the other end of the smoothing capacitor C1, and the other end of the switching circuit 7 via the switch SW2. In addition, the terminal T13 is connected to one end of the voltage detector 12, one end of the smoothing capacitor C2, and one end of the switching circuit 8, and the terminal T14 is connected to the other end of the voltage detector 12, the other end of the smoothing capacitor C2, and the other end of the switching circuit 8.

The switching circuit 7 includes four switching elements Q1 to Q4 respectively having reverse conducting diodes D1 to D4 connected in parallel and connected in a bridge shape and made of, for example, a MOSFET, and switches an input DC voltage according to gate control signals Sg1 to Sg4 which are PWM signals from the controller 10 to output an AC voltage. In addition, the switching circuit 8 includes four switching elements Q5 to Q8 respectively having reverse conducting diodes D5 to D8 connected in parallel and connected in a bridge shape and made of, for example, a MOSFET, and switches an input DC voltage according to gate control signals Sg5 to Sg8 which are PWM signals from the controller 10 to output an AC voltage.

The connection point between the source of the switching element Q1 of the switching circuit 7 and the drain of the switching element Q3 is connected to the connection point between the source of the switching element Q2 of the switching circuit 7 and the drain of the switching element Q4 via the current detector 13, the inductor L, and the primary winding L1 of the transformer TR. In addition, the connection point between the source of the switching element Q5 of the switching circuit 8 and the drain of the switching element Q7 is connected to the connection point between the source of the switching element Q6 of the switching circuit 8 and the drain of the switching element Q8 via the secondary winding L2 of the transformer TR.

In the isolated DC-DC converter apparatus 2 configured as described above, the DC voltage output from the storage battery 1 is input to the switching device 9 via the terminals T11 and T12, the switches SW1 and SW2, the voltage detector 11, and the smoothing capacitor C1. The switching device 9 is controlled by the controller 10, converts the input DC voltage into an AC voltage, then converts the converted AC voltage into a DC voltage, and outputs the DC voltage via the smoothing capacitor C2, the voltage detector 12, and the terminals T13 and T14. In this case, the switches SW1 and SW2 are turned on when the storage battery 1 is charged or discharged, and are turned off when the storage battery 1 is not operated. Each of the smoothing capacitors C1 and C2 smooths and outputs the input DC voltage so as to minimize the ripple. It is noted that the smoothing capacitor C1 needs to be rapidly discharged after the operation of the isolated DC-DC converter apparatus 2 is stopped, whereas the smoothing capacitor C2 has a capacitance larger than the capacitance of the smoothing capacitor C1, and does not need to be rapidly discharged after the operation of the isolated DC-DC converter apparatus 2 is stopped.

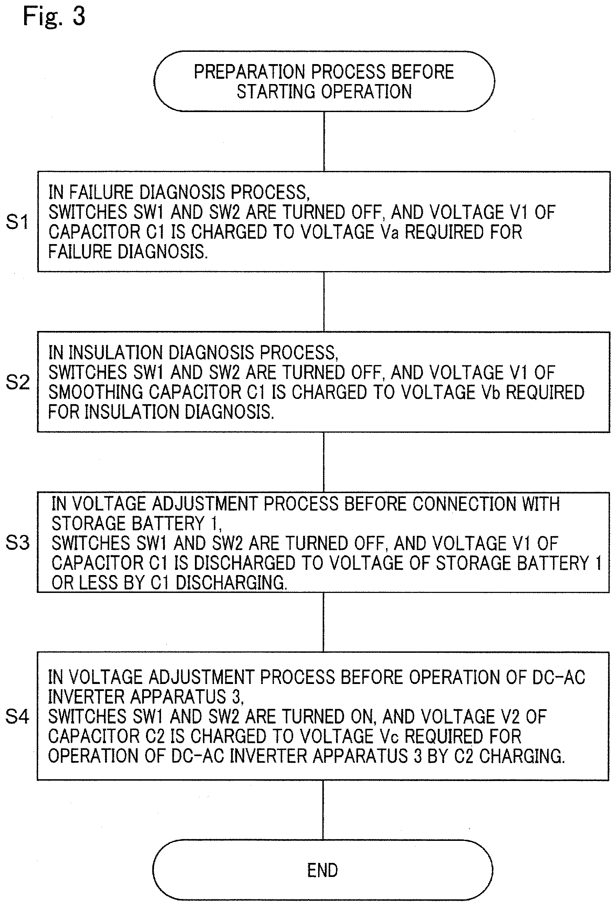

The voltage detector 11 detects the voltage V1 across the smoothing capacitor C1 and outputs the voltage V1 to the controller 10. In addition, the voltage detector 12 detects the voltage V2 across the smoothing capacitor C2, and outputs the voltage V2 to the controller 10. Further, the current detector 13 detects an inductor current IL flowing through the inductor L and outputs the inductor current IL to the controller 10. The controller 10 controls the switches SW1 and SW2, and generates and outputs the gate control signals Sg1 to Sg8 for the switching elements Q1 to Q8 based on the detected voltages V1 and V2 and the inductor current IL, thereby operating the isolated DC-DC converter apparatus 2 as a bidirectional converter apparatus during normal operation, and executing the "preparation process before start of operation" of Fig. 3 before starting the operation.

Fig. 3 is a flowchart showing the preparation process before start of operation executed by the controller 10 of Fig. 2.

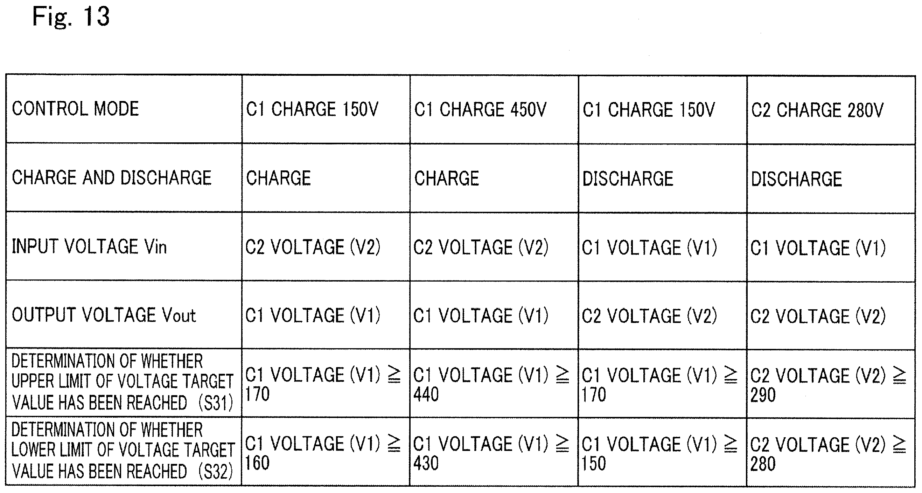

In step S1 of Fig. 3, the failure diagnosis process is executed, specifically, the switches SW1 and SW2 are turned off, and the voltage V1 of the smoothing capacitor C1 is charged to a voltage Va necessary for failure diagnosis. Next, in step S2, the isolation diagnosis process is executed, specifically, the switches SW1 and SW2 are turned off, and the voltage V1 of the smoothing capacitor C1 is charged to a voltage Vb necessary for isolation diagnosis. Further, in step S3, the voltage adjustment process before connection with the storage battery 1 is executed, specifically, the switches SW1 and SW2 are turned off, and the voltage V1 of the capacitor C1 is discharged to the voltage of the storage battery 1 or less by C1 discharge (Fig. 13). In step S4, the voltage adjustment process before the operation of the DC-AC inverter apparatus 3 is executed, specifically, the switches SW1 and SW2 are turned on, and the voltage V2 of the capacitor C2 is charged to a voltage Vc necessary for the operation of the DC-AC inverter apparatus 3 by C2 charging (Fig. 13).

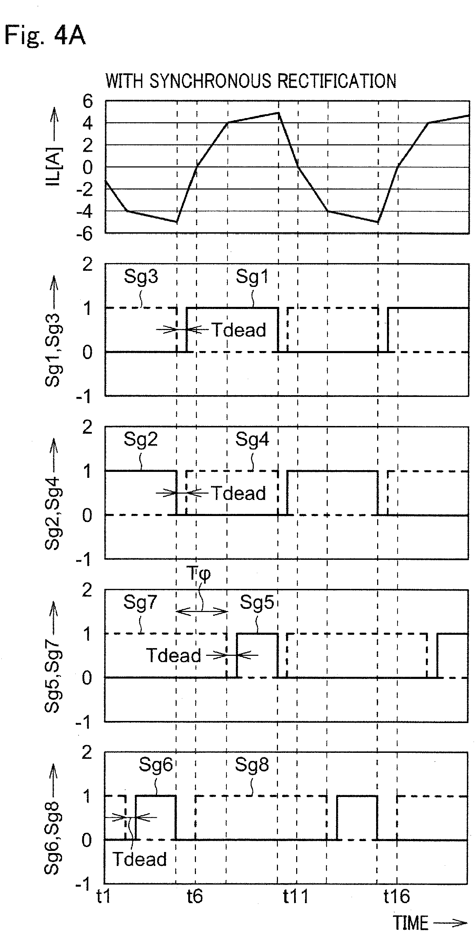

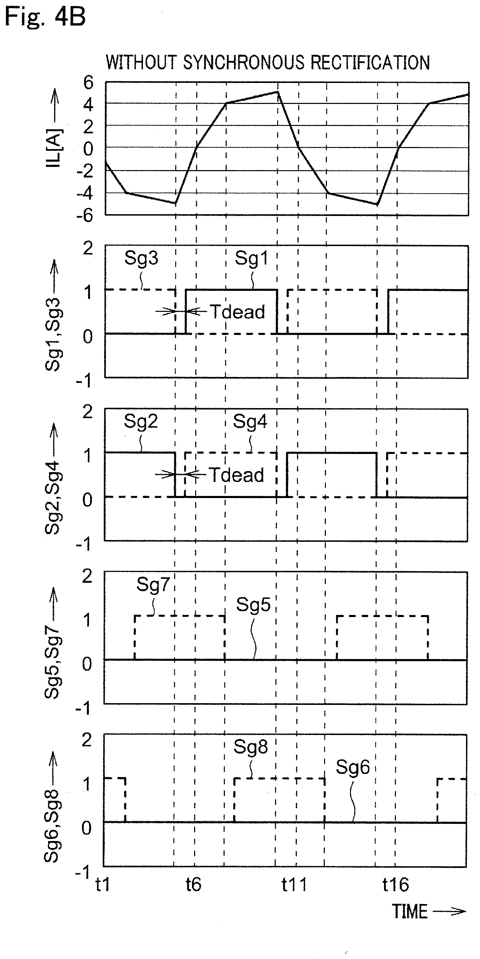

Fig. 4A is a timing chart of each signal showing an operation example when the inductor current IL continues in the step-up switching and synchronous rectification is performed in the isolated DC-DC converter apparatus 2 of Fig. 2. In addition, Fig. 4B is a timing chart of each signal showing an operation example when the inductor current IL continues in the step-up switching and the synchronous rectification is not performed in the isolated DC-DC converter apparatus 2 of Fig. 2. When the gate control signals Sg1 to Sg8 are 1 (high level), the switching elements Q1 to Q8 are turned on, and when the gate control signals Sg1 to Sg8 are 0 (low level), the switching elements Q1 to Q8 are turned off, and so on.

Figs. 4A and 4B show the inductor current IL when the switching elements Q1 to Q8 of the switching circuits 7 and 8 are driven by the gate control signals Sg1 to Sg8, respectively. Tdead is a dead time Tdead for preventing a through current in each of the switching elements Q1 to Q8. In addition, Tcp is a phase shift amount described later in detail. As is clear from the comparison between Figs. 4A and 4B, the gate control signals Sg5 to Sg8 are different depending on the presence or absence of synchronous rectification.

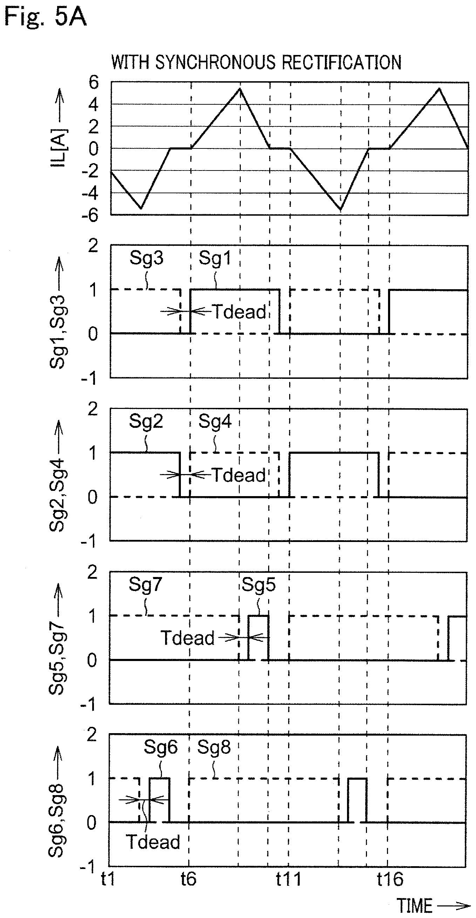

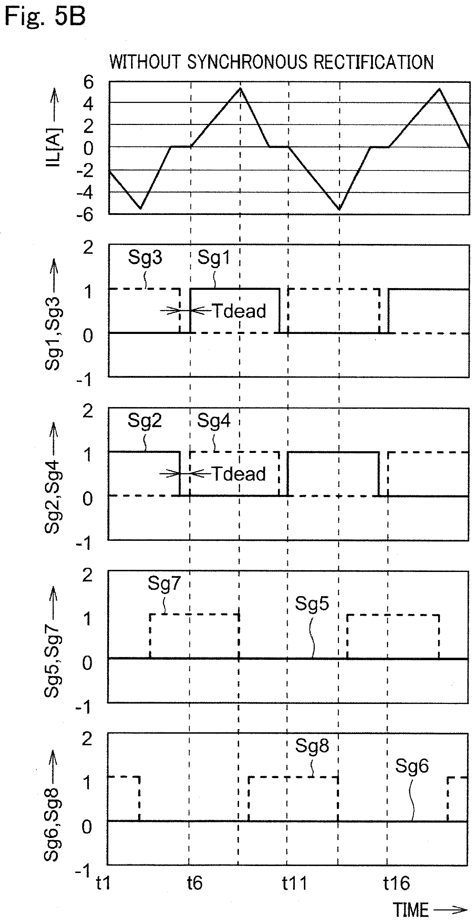

Fig. 5A is a timing chart of each signal showing an operation example when the inductor current IL is discontinuous in the step-up switching and synchronous rectification is performed in the isolated DC-DC converter apparatus 2 of Fig. 2. In addition, Fig. 5B is a timing chart of each signal showing an operation example when the inductor current IL is discontinuous in the step-up switching and synchronous rectification is not performed in the isolated DC-DC converter apparatus 2 of Fig. 2.

Figs. 5A and 5B show the inductor current IL when the switching elements Q1 to Q8 of the switching circuits 7 and 8 are driven by the gate control signals Sg1 to Sg8, respectively. Tdead is a dead time Tdead for preventing a through current in each of the switching elements Q1 to Q8. As is clear from the comparison between Figs. 5A and 5B, the gate control signals Sg5 to Sg8 are different depending on the presence or absence of synchronous rectification.

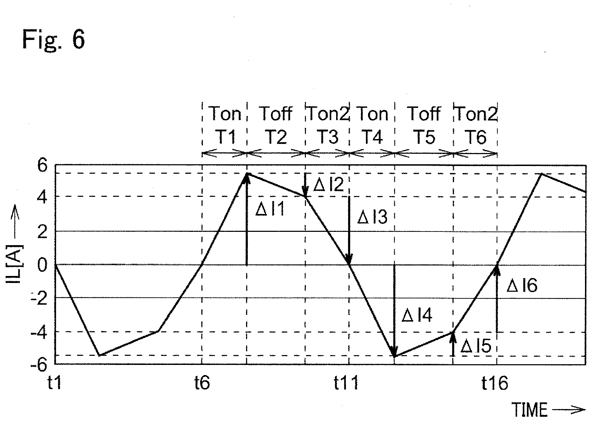

Fig. 6 is a timing chart of the inductor current IL when the inductor current IL has the maximum value and the inductor current IL is continuous in the step-up switching in the isolated DC-DC converter apparatus 2 of Fig. 2.

In Fig. 6, currents $\Delta I1$, $\Delta I2$, and $\Delta I3$, ON times Ton and Ton2, and an OFF time Toff are expressed by the following equations.

$$\Delta I1 = (Vin \times Ton)/L$$

$$\Delta I2 = (Vin - Vout) \cdot Toff/L$$

$$\Delta I3 = - (Vin + Vout) \cdot Ton2/L$$

$$Ton = T\varphi - Ton2$$

$$Ton2 = \{- (Toff \cdot Vout) + (T\varphi + Toff) \cdot Vin\}/(Vout + 2 \cdot Vin)$$

$$Toff = T/2 - T\varphi$$

In this case, Vin is an input voltage, Vout is an output voltage, and L is an inductance of the inductor L.

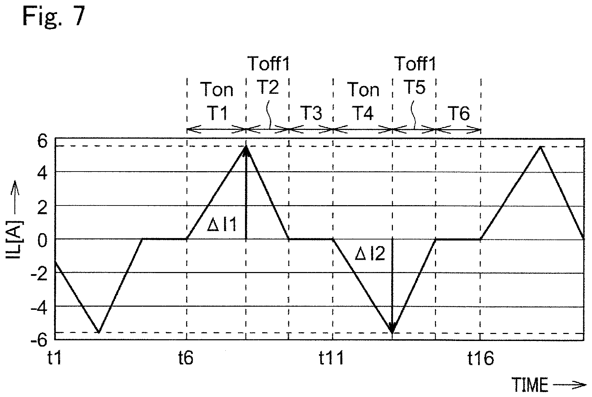

Fig. 7 is a timing chart of the inductor current IL when the inductor current IL has the maximum value and the inductor current IL is discontinuous in the step-up switching in the isolated DC-DC converter apparatus 2 of Fig. 2.

In Fig. 7, the current $\Delta I1$, the on-time Ton, and the off-time Toff1 are expressed by the following equations. Although the inductor current IL is continuous and discontinuous and the theoretical equation of the current maximum value is different, the theoretical equation of the current discontinuity is used as a guide of the current maximum value for simplification of calculation.

$$\Delta I1 = (Vin \cdot Ton)/L$$

$$Ton = T\varphi - Tdead$$

$$Toff1 = (Vin \cdot Ton)/(Vout - Vin)$$

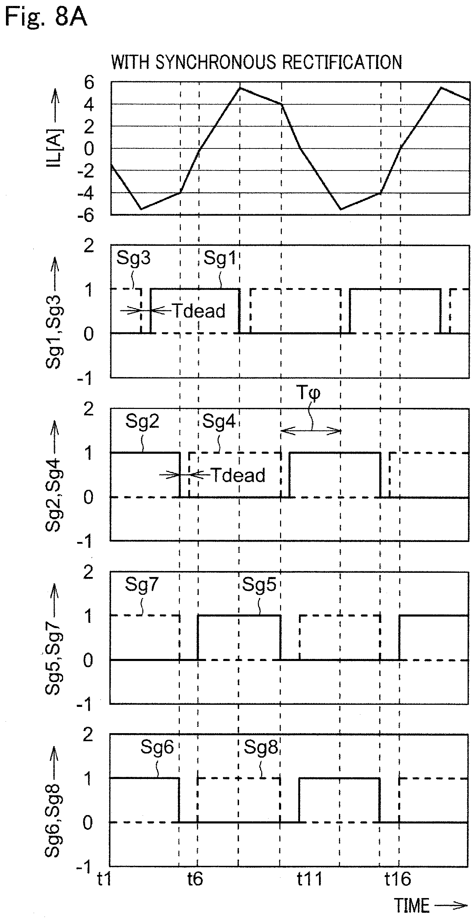

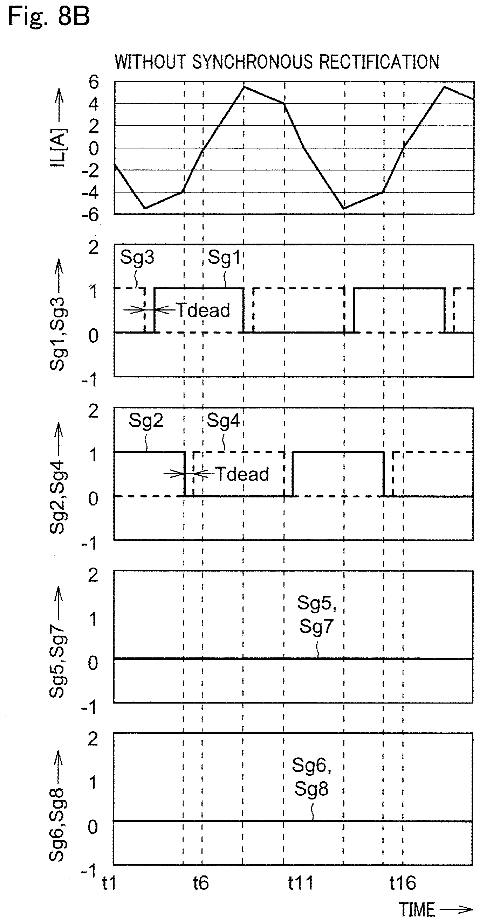

Fig. 8A is a timing chart of each signal showing an operation example when the inductor current IL continues in the step-down switching and synchronous rectification is performed in the isolated DC-DC converter apparatus 2 of Fig. 2. In addition, Fig. 8B is a timing chart of each signal showing an operation example when the inductor current IL continues in the step-down switching and the synchronous rectification is not performed in the isolated DC-DC converter apparatus 2 of Fig. 2.

Figs. 8A and 8B show the inductor current IL when the switching elements Q1 to Q8 of the switching circuits 7 and 8 are driven by the gate control signals Sg1 to Sg8, respectively. Tdead is a dead time Tdead for preventing a through current in each of the switching elements Q1 to Q8. In addition, $T\varphi$ is a phase shift amount described later in detail. As is clear from the comparison between Figs. 8A and 8B, the gate control signals Sg5 to Sg8 are different depending on the presence or absence of synchronous rectification.

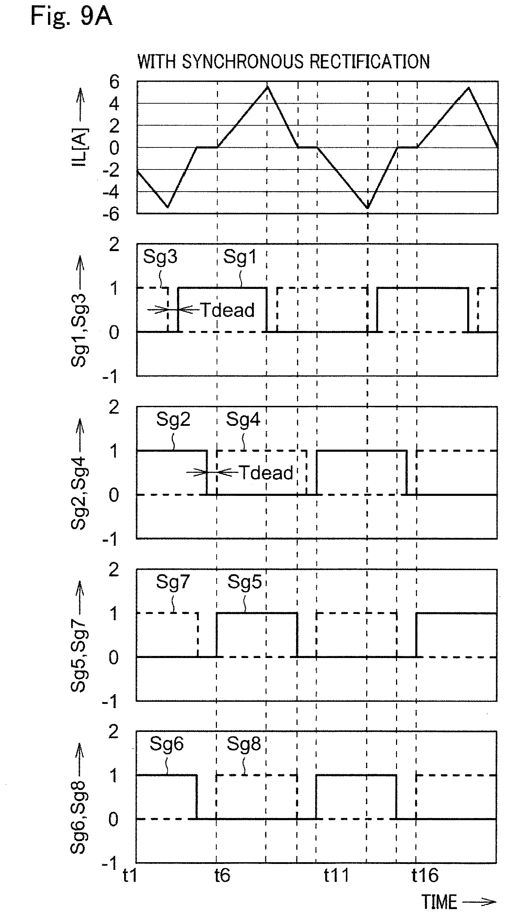

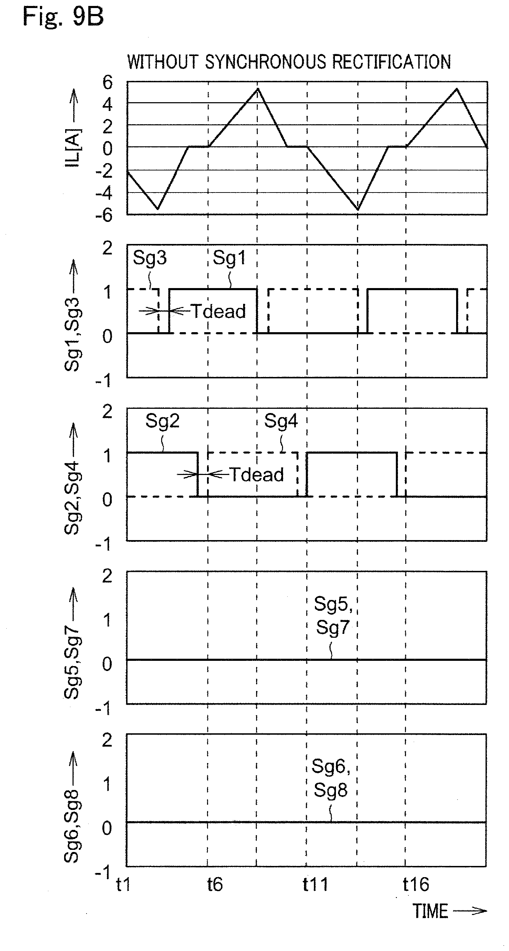

Fig. 9A is a timing chart of each signal showing an operation example when the inductor current IL is discontinuous in the step-down switching and synchronous rectification is performed in the isolated DC-DC converter apparatus 2 of Fig. 2. In addition, Fig. 9B is a timing chart of each signal showing an operation example when the inductor current IL is discontinuous in the step-down switching and synchronous rectification is not performed in the isolated DC-DC converter apparatus 2 of Fig. 2.

Figs. 9A and 9B show the inductor current IL when the switching elements Q1 to Q8 of the switching circuits 7 and 8 are driven by the gate control signals Sg1 to Sg8, respectively. Tdead is a dead time Tdead for preventing a through current in each of the switching elements Q1 to Q8. As is clear from the comparison between Figs. 9A and 9B, the gate control signals Sg5 to Sg8 are different depending on the presence or absence of synchronous rectification.

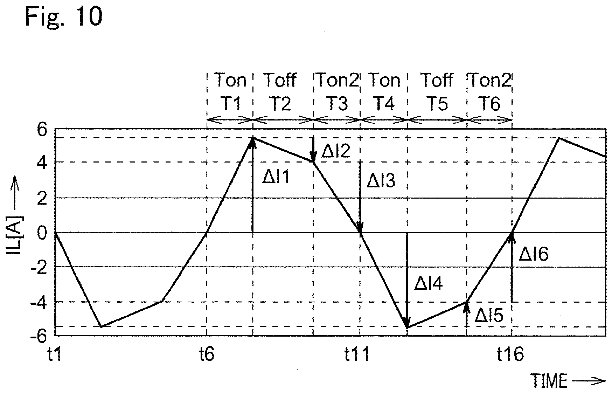

Fig. 10 is a timing chart of the inductor current IL when the inductor current IL has the maximum value and the inductor current IL is continuous in the step-down switching in the isolated DC-DC converter apparatus 2 of Fig. 2.

In Fig. 10, currents $\Delta I1$, $\Delta I2$, and $\Delta I3$, ON times Ton and Ton2, and an OFF time Toff are expressed by the following equations.

$$\Delta I1 = (Vin - Vout) \cdot Ton/L$$

$$\Delta I2 = - (Vout \cdot Toff)/L$$

$$\Delta I3 = - (Vin + Vout) \cdot Ton2/L$$

$$Ton = T\varphi - Ton2$$

$$Ton2 = \{- (Vout \cdot T) + (2 \cdot T\varphi \cdot Vin)\}/(4 \cdot Vin)$$

$$Toff = T/2 - T\varphi$$

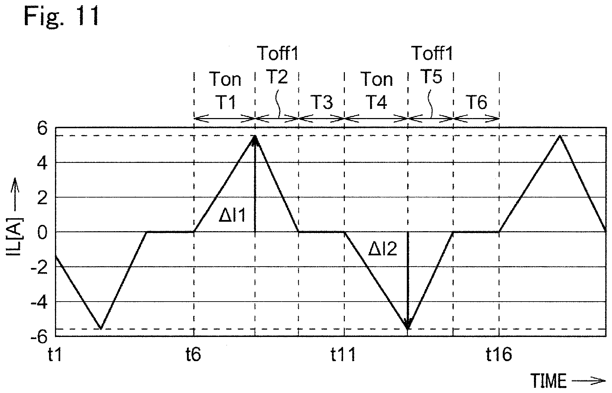

Fig. 11 is a timing chart of the inductor current IL when the inductor current IL has the maximum value and the inductor current IL is discontinuous in the step-down switching in the isolated DC-DC converter apparatus 2 of Fig. 2.

In Fig. 11, the current $\Delta I1$, the on-time Ton, and the off-time Toff1 are expressed by the following equations. Although the inductor current IL is continuous and discontinuous and the theoretical equation of the current maximum value is different, the theoretical equation of the current discontinuity is used as a guide of the current maximum value for simplification of calculation.

$$\Delta I1 = (Vin - Vout) \cdot Ton/L$$

$$Ton = T\varphi - Tdead$$

$$Toff1 = (Vin - Vout) \cdot Ton/Vout$$

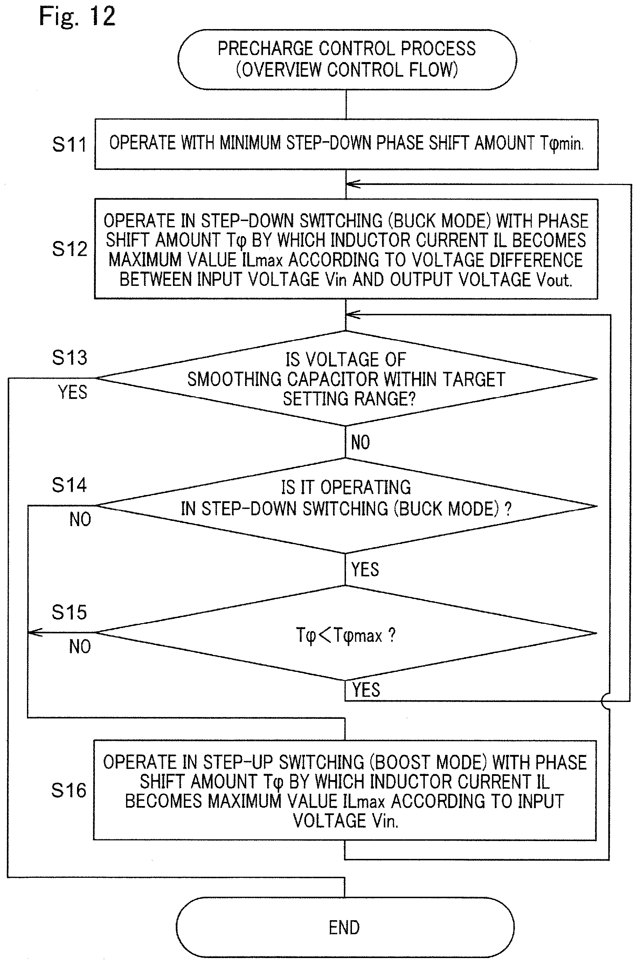

Fig. 12 is a flowchart showing the pre-charge control process (overview control flow) executed by the controller 10 of Fig. 2.

In this case, the phase shift amount $T\varphi$ in the step-down mode (buck mode) is expressed by the following equation.

$$T\varphi = Ton + Tdead$$

$$Ton = (ILtarget \cdot L)/(Vin - Vout)$$

In this case, ILtarget is a target current value flowing through the inductor L.

In addition, the phase shift amount $T\varphi$ in the step-up mode (boost mode) is expressed by the following equation.

$$T\varphi = Ton + Tdead$$

$$Ton = (ILtarget \cdot L)/Vin$$

In step S11 of the pre-charging process (overview flow) of Fig. 12, the switching device 9 is operated with the minimum phase shift amount $T\varphi$min in the. step-down mode (buck mode). Next, in step S12, the switching device 9 is operated in the step-down switching (buck mode) by the phase shift amount $T\varphi$ ($T\varphi$ calculated as ILtarget = ILmax) at which the inductor current IL becomes the maximum value ILmax according to the voltage difference between the input voltage Vin and the output voltage Vout. Then, in step S13, it is determined whether the voltage (in the case of C1 discharge of 150 V, the voltage is the voltage of the input capacitor, and the voltage other than C 1 discharge of 150 V is the voltage of the output capacitor) of the smoothing capacitor is within the target value setting range, and when YES, the pre-charging process is terminated, and when NO, the process proceeds to step S14. In step S14, it is determined whether the switching device 9 is operating in step-down switching (buck mode), and when YES, the process proceeds to step S15, and when NO, the process proceeds to step S16. In step S15, it is determined whether or not the calculation result $T\varphi$ < $T\varphi$max (the upper limit value of the phase shift amount $T\varphi$) of the phase shift amount $T\varphi$ at which the inductor current IL becomes the maximum value ILmax is satisfied. When YES, the process returns to step S12, and when NO, the process proceeds to step S16. In step S16, according to the input voltage Vin, the switching device 9 is operated in the step-up switching (boost mode) with the phase shift amount $T\varphi$ at which the inductor current IL becomes the maximum value ILmax.

In the pre-charging process of Fig. 12, the following process is omitted from the actual operation process.

(1) the soft start process in which the current gradually increases.
(2) the charge standby process of waiting at a minimum output (zero) so that recharging can be immediately started when a voltage changes by a predetermined amount or more after completion of charging.

In the pre-charge control process configured as described above, the switching device 9 is operated in the step-down switching (buck mode) at the phase shift amount $T\varphi$ at which the inductor current IL becomes the maximum value ILmax until the voltage (for example, in the case of C1 discharge 150 V, the voltage is the voltage of the input capacitor) of the smoothing capacitor whose voltage is desired to be adjusted falls within the target voltage range, which can be used in each of the processes S1 to S4 in the preparation process before the start of the operation of Fig. 3 (S11). When $T\varphi$ < $T\varphi$max (YES in step S14) during the operation in the step-down switching (buck mode) (YES in S15), the switching device 9 is operated in the step-down switching (buck mode) at the phase shift amount $T\varphi$ at which the inductor current IL becomes the maximum value ILmax in accordance with the voltage difference between the input voltage Vin and the output voltage Vout in step S12. On the other hand, if $T\varphi \geq T\varphi$max even when the switching device 9 is not operating in the step-down switching (buck mode) (NO in step S14) or operating in the step-down switching (buck mode) (YES in step S14) (NO in S15), the switching device 9 is operated in the step-up switching (boost mode) at the phase shift amount $T\varphi$ at which the inductor current IL becomes the maximum value ILmax according to the input voltage Vin in step S16.

Fig. 13 is a diagram showing a table of charge and discharge control modes executed by the switching device 9 of Fig. 2. As is clear from Fig. 13, the isolated DC-DC converter apparatus 2 has the following four control modes. It is noted that the voltage is an example during operation.

(1) C1 charge 150 V: An operation mode in which the input voltage Vin becomes the voltage V2, the output voltage Vout becomes the voltage V1, the operation is performed in a state where the switches SW1 and SW2 are turned off and separated from the storage battery 1, and the smoothing capacitor C1 is charged.
(2) C1 charge 450 V: An operation mode in which the input voltage Vin becomes the voltage V2, the output voltage Vout becomes the voltage V1, the operation is performed in a state where the switches SW1 and SW2 are turned off and separated from the storage battery 1, and the smoothing capacitor C1 is charged.
(3) C1 discharge 150 V: An operation mode in which the input voltage Vin becomes the voltage V1, the output voltage Vout becomes the voltage V2, the operation is performed in a state where the switches SW1 and SW2 are turned off and separated from the storage battery 1, and the smoothing capacitor C1 is discharged.
(4) C2 charge 280 V: An operation mode in which the input voltage Vin becomes the voltage V1, the output voltage Vout becomes the voltage V2, the operation is performed in a state where the switches SW1 and SW2 are turned on and connected to the storage battery 1, and the DC power is discharged from the storage battery 1.

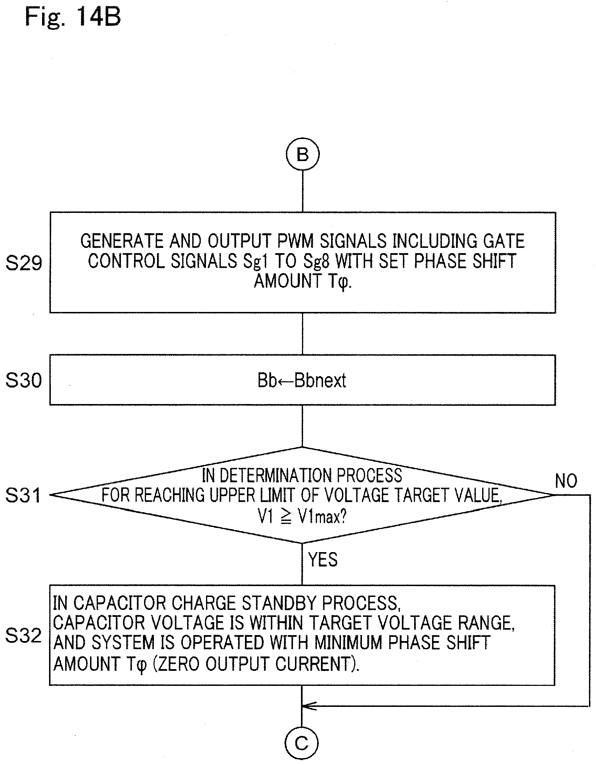

The "voltage target value upper limit reaching setting" of Fig. 13 is the process of step S31 of Fig. 14B. In addition, the "voltage target value lower limit reaching setting" of Fig. 13 is the process in one step in step S32 of Fig. 14B. In Fig. 13, there is a charge or discharge item because a timing chart is different between charge and discharge. Figs. 4A, 4B, 5A, 5B, 8A, 8B, 9A, and 9B described above are patterns at the time of discharge, the primary side and the secondary side are switched at the time of charge, and gate control signals Sg1, Sg2, Sg3, Sg4, Sg5, Sg6, Sg7, and Sg8 at the time of discharge are gate control signals Sg5, Sg6, Sg7, Sg8, Sg1, Sg2, Sg3, and Sg4 at the time of charge, respectively. That is, the gate control signal Sg in the timing chart is different between charging and discharging.

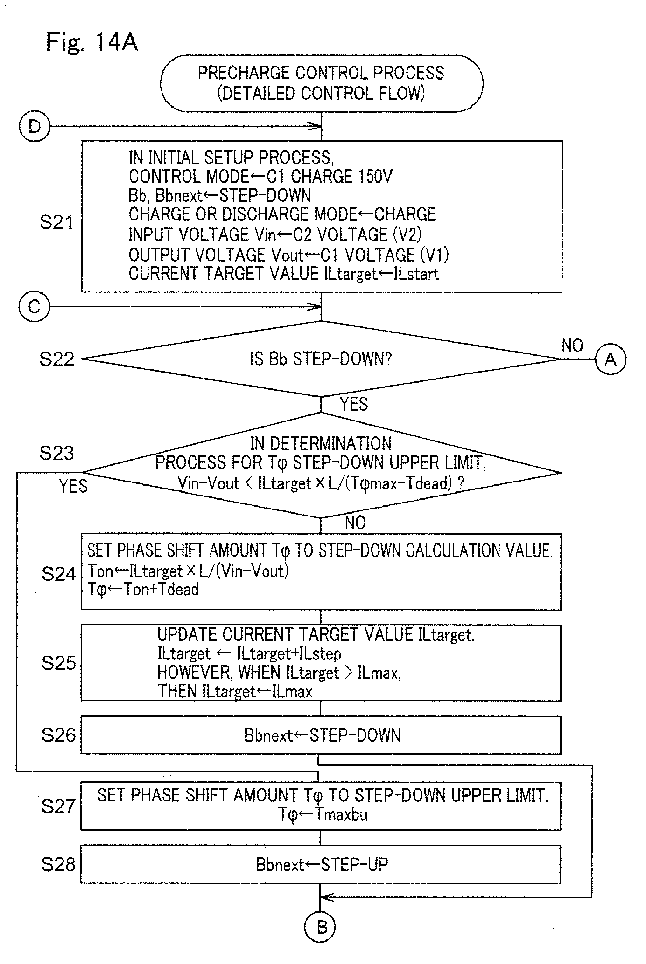

Figs. 14A to 14C are flowcharts showing the pre-charge control process (detailed control flow) executed by the controller 10 of Fig. 2. In Figs. 14A to 14C, an operation example of "C1 charging 150 V" in the operation mode of Fig. 13 will be described below. In this operation example, the smoothing capacitor is C1, and the output voltage thereof is V1. As is clear from Fig. 13, in the C1 discharge or the C2 charge, the smoothing capacitor is C2, and the output voltage thereof is V2.

In step S21 of Fig. 14A, first of all, the initial setting process is executed. Specifically, C1 charging 150 V is set to the control mode, "step-down" is set to each of the parameters Bb and Bbnext, and "charge" is set to the charge and discharge mode. In addition, a C2 voltage (V2) is set to the input voltage Vin, a C1 voltage (V1) is set to the output voltage Vout, and a predetermined current start value ILstart is set to the current target value ILtarget.

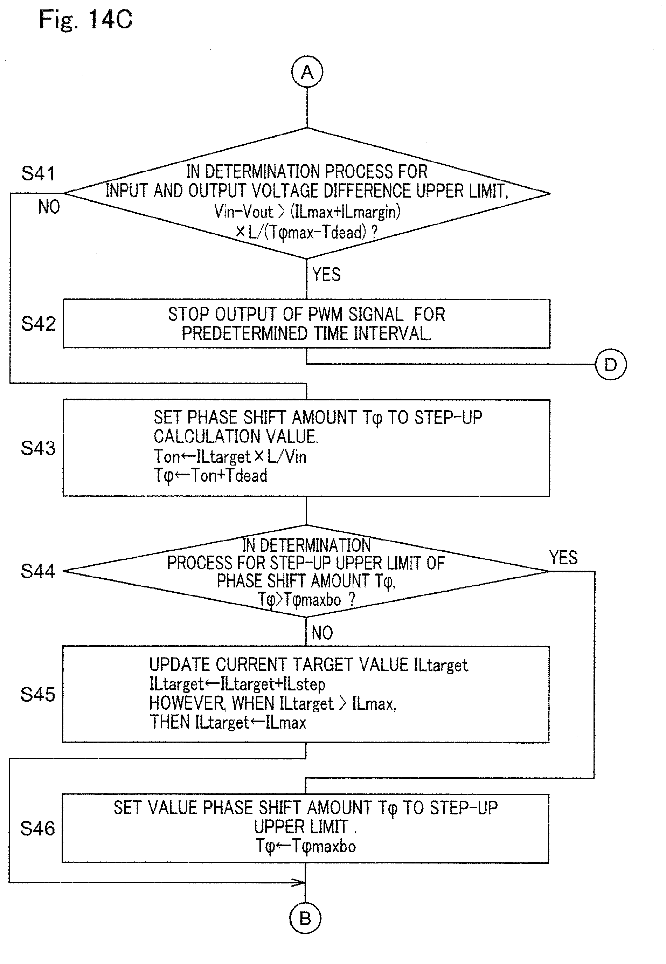

Next, in step S22, it is determined whether the parameter Bb is "step-down". When YES, the process proceeds to step S23, and when NO, the process proceeds to step S41 of Fig. 14C. In step S23, the determination process for the $T\varphi$ step-down upper limit is executed, and specifically, it is determined whether Vin - Vout < ILtarget x L/(T$\varphi$max - Tdead). When YES, the process proceeds to step S27, and when NO, the process proceeds to step S24. In this case, Tcpmax is the maximum value of the phase shift amount $T\varphi$.

In step S24, the phase shift amount $T\varphi$ is set to a step-down calculation value. Specifically, ILtarget $\times$ L/(Vin - Vout) is set to the ON time Ton, and Ton + Tdead is set to the phase shift amount $T\varphi$. Next, in step S25, the current target value ILtarget is updated. Specifically, ILtarget + ILstep is set to the target value ILtarget of the inductor current IL, where ILtarget > ILmax (the upper limit value of the inductor current IL), ILmax is set to the target value ILtarget of the inductor current IL. Then, in step S26, "step-down" is set to the parameter Bbnext, and the process proceeds to step S29 of Fig. 14B.

In step S27, the phase shift amount $T\varphi$ is set to the step-down upper limit value Tmaxbu, and in step S28, "step-up" is set to the parameter Bbnext, and then the process proceeds to step S29 of Fig. 14B.

In step S29 of Fig. 14B, the PWM signal including the gate control signals Sg J. to Sg8 is generated with the set phase shift amount $T\varphi$ and output to the switching device 9, thereby driving and operating the switching device 9. Next, in step S30, data of the parameter Bbnext is set to the parameter Bb, and in step S31, the determination process for reaching the upper limit of the voltage target value is executed. Specifically, it is determined whether V1 ≥ V1max. When YES, the process proceeds to step S32. On the other hand, when NO, the process returns to step S22 of Fig. 14A. In step S32, capacitor charge standby process is executed. Specifically, the capacitor voltage (voltage V1 at C1 charge 150 V) of the output voltage Vout is in the target voltage range, and the switching device 90 is controlled to operate with the minimum phase shift amount $T\varphi$ (output current is 0), and then the process returns to step S22 of Fig. 14A.

In step S41 of Fig. 14C, the determination process for the input and output voltage difference upper limit is executed. Specifically, it is determined whether Vin - Vout > (ILmax + ILmargin) $\times$ L/(T$\varphi$max - Tdead). When YES, the process proceeds to step S42, and when NO, the process proceeds to step S43. In this case, ILmargin is a predetermined margin value of the inductor current IL. Next, in step S42, after the output of the PWM signal is stopped for a predetermined period, the process returns to step S21 of Fig. 14A.

In step S43, the phase shift amount Tcp is set to a step-up calculation value. Specifically, ILtarget $\times$ L/Vin is set to the on-period Ton, and Ton + Tdead is set to the phase shift amount $T\varphi$. Next, in step S44, the determination process for the step-up upper limit of the phase shift amount $T\varphi$ is executed, specifically, it is determined whether $T\varphi$ > Tcpmaxbo. When YES, the process proceeds to step S46, and when NO, the process proceeds to step S45. In this case, Tcpmaxbo is a step-up upper limit value of the phase shift amount $T\varphi$. In step S45, the current target value ILtarget is updated. Specifically, ILtarget is incremented by a predetermined step value ILstep, and when ILtarget > ILmax, the inductor current maximum value ILmax is set to ILtarget. In step S46, after setting the step-up upper limit value T$\varphi$maxbo to the phase shift amount Tcp, the process returns to step S29.

In the pre-charge control process configured as described above, the switching device 9 is operated with the phase shift amount $T\varphi$ such that the inductor current IL becomes the upper limit value until the output voltage of the smoothing capacitor falls within the target voltage range in the charging process of the smoothing capacitor in steps S21 to S31 and S41 to S46, which can be used in each of the processes S1 to S4 in the preparation process before the start of the operation of Fig. 3, and the charging control process of the smoothing capacitor in step S32 is executed when the output voltage of the smoothing capacitor becomes the upper limit value of the target voltage range. In the charging control process of the smoothing capacitor, the output voltage of the smoothing capacitor is in the target voltage range, the switching device 9 is operated with the minimum phase shift amount Tφ (output current zero), and in this state, when the output voltage of the smoothing capacitor reaches the lower limit value of the target voltage range, the process returns to the charging process of the smoothing capacitor.

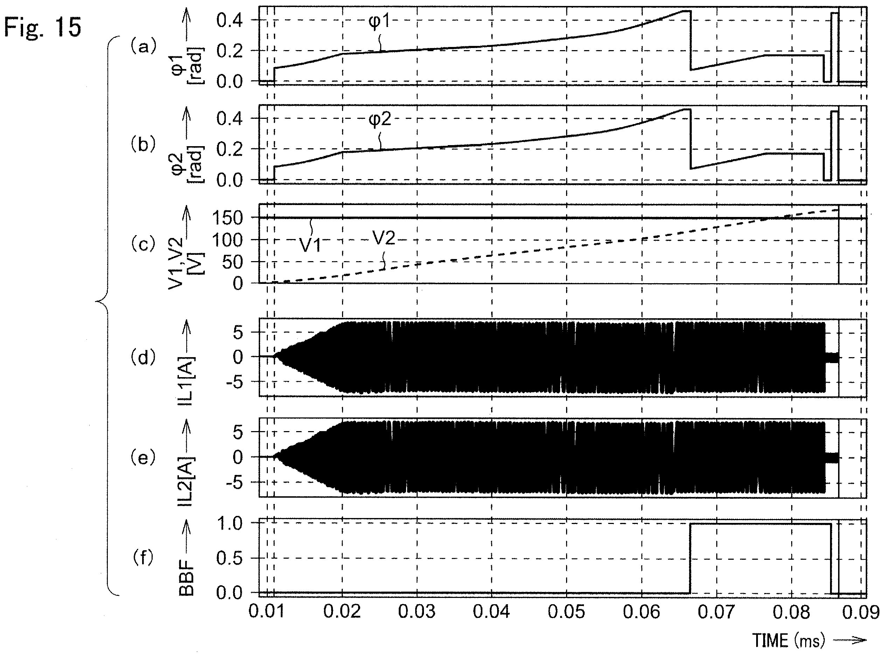

Fig. 15 is a simulation result of the isolated DC-DC converter apparatus 2 of Fig. 2, and is a timing chart of each signal. For convenience of simulation, the present inventors performed verification by two-phase interleaving.

As is clear from the phase shift amounts φ1 and φ2 in Figs. 15(a) and (b), the phase shift amount Tφ gradually increases, and when the phase shift amount Tφ reaches the step-down upper limit value, the phase shift amount Tφ is switched to step-up, and the phase shift amount Tφ gradually increases from the step-up lower limit value. In addition, the voltage V2 of Fig. 15(c) stops when reaching the target value. Further, the inductor currents IL1 and IL2 in Figs. 15(d) and (e) are different from each other by 90 degrees, and the currents gradually increase, but the inductor currents IL1 and IL2 operate so as to be 10 A or less, and when the voltage V2 reaches the target value, the currents become substantially 0. (f) of Fig. 15 shows a step-up and step-down flag BFF, where BFF = 0 indicates step-down and BFF = 1 indicates step-up.

It is noted that the controller 10 monitors the inductor current value detected by the current detector 13, and determines the current upper limit value, thereby allowing the inductor current IL to flow to almost reach the current upper limit value and enabling more rapid discharge.

As described above, according to the present embodiment, by executing the pre-charge control process of Fig. 12 or Figs. 14A to 14C, the controller 10 controls the switching device 9 to adjust the input voltage and the output voltage so that the inductor current IL flowing through the inductor L becomes less than the predetermined upper limit value based on the input voltage and the output voltage in the preparation operation before the start of operation. Therefore, in the isolated DC-DC converter apparatus, the voltage of the smoothing capacitor can be controlled in a relatively short time within a predetermined operation time with a simple configuration as compared with the prior art.

MODIFIED EMBODIMENTS

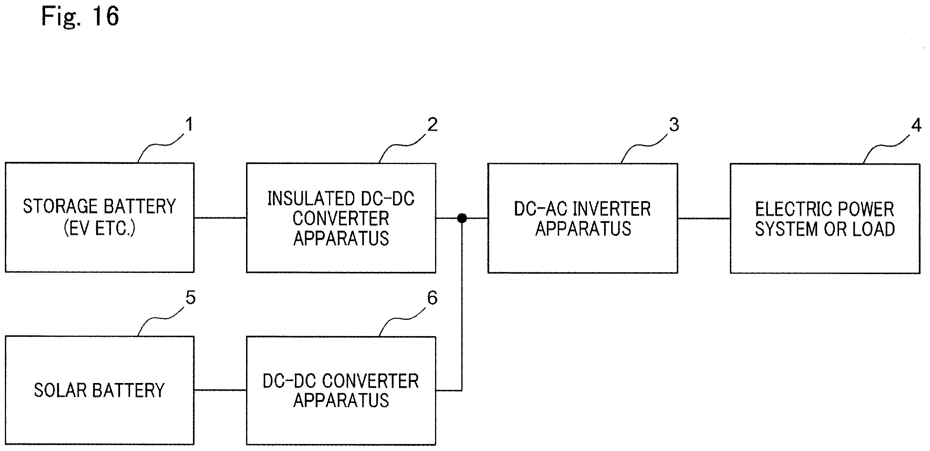

Fig. 16 is a block diagram showing a configuration example of a power conversion system according to a modified embodiment. The power conversion system according to the modified embodiment of Fig. 16 is different from the power conversion system of Fig. 1 in the following points.

(1) Further, the solar battery 5 and the DC-DC converter apparatus 6 are further provided. In this case, an output terminal of the DC-DC converter apparatus 6 is connected in parallel to a connection point between the isolated DC-DC converter apparatus 2 and the DC-AC inverter apparatus 3.

The differences will be described below.

In Fig. 16, a DC voltage related to DC power generated by the solar battery 5 is converted into a predetermined DC voltage by the DC-DC converter apparatus 6, and then charged in the storage battery 1 via the isolated DC-DC converter apparatus 2 or output to the load 4 via the DC-AC inverter apparatus 3.

In the power conversion system according to the modified embodiment configured as described above, the DC power generated by the solar battery 5 can be charged in the storage battery 1 or output to the load 4. In addition, since the power conversion system according to the modified embodiment includes the isolated DC-DC converter apparatus 2, the power conversion system has the same effects as those of the power conversion system according to the embodiment.

INDUSTRIAL APPLICABILITY

As described above in detail, according to the isolated DC-DC converter apparatus according to the present invention, in the preparation operation before the start of operation, the switching device is controlled to adjust the input voltage and the output voltage so that the inductor current flowing through the inductor becomes less than the predetermined upper limit value based on the input voltage and the output voltage. Therefore, in the isolated DC-DC converter apparatus, the voltage of the smoothing capacitor can be controlled in a relatively short time within a predetermined operation time with a simple configuration as compared with the prior art.

EXPLANATION OF REFERENCES

1 Storage battery

2 Isolated DC-DC converter apparatus
3 DC-AC inverter apparatus
4 Power system (or load)
5 Solar battery
6 DC-DC converter apparatus
7 and 8 Switching circuit
9 Switching device
10 Controller
11 and 12 Voltage detector
13 Current detector
C1 and C2 Smoothing capacitor
D1 to D8 Reverse conducting diode
L Inductor
L1 Primary winding
L2 Secondary winding
Q1 to Q8 Switching element
SW1 and SW2 switch
T11 to T14 Terminal
TR Isolating transformer

**Claims**

1. An isolated DC-DC converter apparatus comprising:

   a first smoother including a first capacitor configured to smooth an input voltage;
   a switching device including an isolating transformer, an inductor, a switching circuit on a primary side of the isolating transformer, and a switching circuit on a secondary side of the isolating transformer, the switching device configured to switch a smoothed voltage and convert power into a predetermined output voltage;
   a second smoother including a second capacitor configured to smooth the power-converted output voltage; and
   a controller configured to control a preparation operation of the switching device before start of operation, wherein the controller controls the switching device to adjust the input voltage and the output voltage such that an inductor current flowing through the inductor becomes less than a predetermined upper limit value based on the input voltage and the output voltage in a preparation operation before the start of operation.

2. The isolated DC-DC converter apparatus as claimed in claim 1, wherein the preparation operation before the start of operation includes:

   (1) a failure diagnosis process of charging the output voltage to a voltage necessary for failure diagnosis;
   (2) an isolation diagnosis process of charging the output voltage to a voltage necessary for isolation diagnosis;
   (3) a voltage adjustment process before the first smoother is connected to a storage battery, the voltage adjustment process charging the output voltage to a rated voltage of the storage battery; and
   (4) a voltage adjustment process of charging the output voltage to a voltage necessary for operation of the switching device.

3. The isolated DC-DC converter apparatus as claimed in claim 1 or 2, wherein the controller is configured to:

   (1) cause the switching device to operate by step-down switching with a phase shift amount such that the inductor current becomes a predetermined upper limit value until the output voltage falls within a target voltage range, and causing the switching device to operate by step-down switching when the output voltage is less than the upper limit value, and
   (2) cause the switching device to operate with step-up switching when the output voltage is not less than an upper limit value even when the switching device does not operate with step-down switching or operating with step-down switching.

4. A power conversion system comprising:

   the isolated DC-DC converter apparatus as defined in any one of claims 1 to 3; and

a DC-AC inverter apparatus configured to convert an output voltage output from the isolated DC-DC converter apparatus into an AC voltage.

5. The power conversion system as claimed in claim 4, further comprising a DC-DC converter configured to convert an input voltage output from a solar battery into a predetermined output voltage, and output the predetermined output voltage to the isolated DC-DC converter apparatus or the DC-AC inverter apparatus.

6. A method for controlling an isolated DC-DC converter apparatus, the isolated DC-DC converter apparatus including:

a first smoother including a first capacitor configured to smooth an input voltage;
a switching device including an isolating transformer, an inductor, a switching circuit on a primary side of the isolating transformer, and a switching circuit on a secondary side of the isolating transformer, the switching device configured to switch the smoothed voltage and converting power into a predetermined output voltage;
a second smoother including a second capacitor configured to smooth the power-converted output voltage; and
a controller configured to control a preparation operation of the switching device before start of operation, wherein the method comprises a step of:
by the controller, controlling the switching device to adjust the input voltage and the output voltage such that an inductor current flowing through the inductor becomes less than a predetermined upper limit value based on the input voltage and the output voltage in a preparation operation before the start of operation.

Fig. 1

| STORAGE BATTERY (SUCH AS EV) | INSULATED DC-DC CONVERTER APPARATUS | DC-AC INVERTER APPARATUS | ELECTRIC POWER SYSTEM OR LOAD |

1     2     3     4

# Fig. 2

EP 4 429 093 A1

## Fig. 3

```
┌─────────────────────────────────┐
│   PREPARATION PROCESS BEFORE     │
│       STARTING OPERATION         │
└─────────────────────────────────┘
                 │
┌─────────────────────────────────────────────────────────────┐
│     IN FAILURE DIAGNOSIS PROCESS,                             │
│ S1  SWITCHES SW1 AND SW2 ARE TURNED OFF, AND VOLTAGE V1 OF    │
│     CAPACITOR C1 IS CHARGED TO VOLTAGE Va REQUIRED FOR        │
│     FAILURE DIAGNOSIS.                                        │
└─────────────────────────────────────────────────────────────┘
                 │
┌─────────────────────────────────────────────────────────────┐
│     IN INSULATION DIAGNOSIS PROCESS,                          │
│ S2  SWITCHES SW1 AND SW2 ARE TURNED OFF, AND VOLTAGE V1 OF    │
│     SMOOTHING CAPACITOR C1 IS CHARGED TO VOLTAGE Vb REQUIRED  │
│     FOR INSULATION DIAGNOSIS.                                 │
└─────────────────────────────────────────────────────────────┘
                 │
┌─────────────────────────────────────────────────────────────┐
│     IN VOLTAGE ADJUSTMENT PROCESS BEFORE CONNECTION WITH      │
│     STORAGE BATTERY 1,                                        │
│ S3  SWITCHES SW1 AND SW2 ARE TURNED OFF, AND VOLTAGE V1 OF    │
│     CAPACITOR C1 IS DISCHARGED TO VOLTAGE OF STORAGE BATTERY 1│
│     OR LESS BY C1 DISCHARGING.                                │
└─────────────────────────────────────────────────────────────┘
                 │
┌─────────────────────────────────────────────────────────────┐
│     IN VOLTAGE ADJUSTMENT PROCESS BEFORE OPERATION OF DC-AC   │
│     INVERTER APPARATUS 3,                                     │
│ S4  SWITCHES SW1 AND SW2 ARE TURNED ON, AND VOLTAGE V2 OF     │
│     CAPACITOR C2 IS CHARGED TO VOLTAGE Vc REQUIRED FOR        │
│     OPERATION OF DC-AC INVERTER APPARATUS 3 BY C2 CHARGING.   │
└─────────────────────────────────────────────────────────────┘
                 │
┌─────────────────────────────────┐
│              END                 │
└─────────────────────────────────┘
```

## Fig. 4A

WITH SYNCHRONOUS RECTIFICATION

## Fig. 4B

### WITHOUT SYNCHRONOUS RECTIFICATION

## Fig. 5A

WITH SYNCHRONOUS RECTIFICATION

## Fig. 5B

WITHOUT SYNCHRONOUS RECTIFICATION

Fig. 6

Fig. 7

## Fig. 8A

WITH SYNCHRONOUS RECTIFICATION

# Fig. 8B

WITHOUT SYNCHRONOUS RECTIFICATION

## Fig. 9A

WITH SYNCHRONOUS RECTIFICATION

## Fig. 9B

WITHOUT SYNCHRONOUS RECTIFICATION

Fig. 10

Fig. 11

## Fig. 12

PRECHARGE CONTROL PROCESS
(OVERVIEW CONTROL FLOW)

S11 | OPERATE WITH MINIMUM STEP-DOWN PHASE SHIFT AMOUNT $T\varphi min$.

S12 | OPERATE IN STEP-DOWN SWITCHING (BUCK MODE) WITH PHASE SHIFT AMOUNT $T\varphi$ BY WHICH INDUCTOR CURRENT IL BECOMES MAXIMUM VALUE ILmax ACCORDING TO VOLTAGE DIFFERENCE BETWEEN INPUT VOLTAGE Vin AND OUTPUT VOLTAGE Vout.

S13 | IS VOLTAGE OF SMOOTHING CAPACITOR WITHIN TARGET SETTING RANGE?

YES

NO

S14 | IS IT OPERATING IN STEP-DOWN SWITCHING (BUCK MODE) ?

NO

YES

S15 | $T\varphi < T\varphi max$ ?

NO

YES

S16 | OPERATE IN STEP-UP SWITCHING (BOOST MODE) WITH PHASE SHIFT AMOUNT $T\varphi$ BY WHICH INDUCTOR CURRENT IL BECOMES MAXIMUM VALUE ILmax ACCORDING TO INPUT VOLTAGE Vin.

END

**Fig. 13**

| CONTROL MODE | C1 CHARGE 150V | C1 CHARGE 450V | C1 CHARGE 150V | C2 CHARGE 280V |
|---|---|---|---|---|
| CHARGE AND DISCHARGE | CHARGE | CHARGE | DISCHARGE | DISCHARGE |
| INPUT VOLTAGE Vin | C2 VOLTAGE (V2) | C2 VOLTAGE (V2) | C1 VOLTAGE (V1) | C1 VOLTAGE (V1) |
| OUTPUT VOLTAGE Vout | C1 VOLTAGE (V1) | C1 VOLTAGE (V1) | C2 VOLTAGE (V2) | C2 VOLTAGE (V2) |
| DETERMINATION OF WHETHER UPPER LIMIT OF VOLTAGE TARGET VALUE HAS BEEN REACHED (S31) | C1 VOLTAGE (V1) $\geqq$ 170 | C1 VOLTAGE (V1) $\geqq$ 440 | C1 VOLTAGE (V1) $\geqq$ 170 | C2 VOLTAGE (V2) $\geqq$ 290 |
| DETERMINATION OF WHETHER LOWER LIMIT OF VOLTAGE TARGET VALUE HAS BEEN REACHED (S32) | C1 VOLTAGE (V1) $\geqq$ 160 | C1 VOLTAGE (V1) $\geqq$ 430 | C1 VOLTAGE (V1) $\geqq$ 150 | C2 VOLTAGE (V2) $\geqq$ 280 |

EP 4 429 093 A1

# Fig. 14A

$$\boxed{\begin{array}{c}\text{PRECHARGE CONTROL PROCESS}\\\text{(DETAILED CONTROL FLOW)}\end{array}}$$

(D) ────────────────────→

**S21**
IN INITIAL SETUP PROCESS,
CONTROL MODE←C1 CHARGE 150V
Bb, Bbnext←STEP-DOWN
CHARGE OR DISCHARGE MODE←CHARGE
INPUT VOLTAGE Vin←C2 VOLTAGE (V2)
OUTPUT VOLTAGE Vout←C1 VOLTAGE (V1)
CURRENT TARGET VALUE ILtarget←ILstart

(C) ────────────────────→

**S22** IS Bb STEP-DOWN? ──NO──→ (A)

YES

**S23** IN DETERMINATION
PROCESS FOR Tφ STEP-DOWN UPPER LIMIT,
Vin−Vout < ILtarget × L/(Tφmax−Tdead) ?

YES

NO

**S24** SET PHASE SHIFT AMOUNT Tφ TO STEP-DOWN CALCULATION VALUE.
Ton←ILtarget × L/(Vin−Vout)
Tφ←Ton+Tdead

**S25** UPDATE CURRENT TARGET VALUE ILtarget.
ILtarget ← ILtarget+ILstep
HOWEVER, WHEN ILtarget > ILmax,
THEN ILtarget←ILmax

**S26** Bbnext←STEP-DOWN

**S27** SET PHASE SHIFT AMOUNT Tφ TO STEP-DOWN UPPER LIMIT.
Tφ←Tmaxbu

**S28** Bbnext←STEP-UP

(B)

## Fig. 14B

(B)

S29 | GENERATE AND OUTPUT PWM SIGNALS INCLUDING GATE CONTROL SIGNALS Sg1 TO Sg8 WITH SET PHASE SHIFT AMOUNT T$\varphi$.

S30 | Bb←Bbnext

S31 | IN DETERMINATION PROCESS FOR REACHING UPPER LIMIT OF VOLTAGE TARGET VALUE, V1 ≧ V1max? — NO

YES

S32 | IN CAPACITOR CHARGE STANDBY PROCESS, CAPACITOR VOLTAGE IS WITHIN TARGET VOLTAGE RANGE, AND SYSTEM IS OPERATED WITH MINIMUM PHASE SHIFT AMOUNT T$\varphi$ (ZERO OUTPUT CURRENT).

(C)

## Fig. 14C

(A)

S41 — IN DETERMINATION PROCESS FOR INPUT AND OUTPUT VOLTAGE DIFFERENCE UPPER LIMIT, $Vin-Vout > (ILmax+ILmargin) \times L/(T\varphi max-Tdead)$ ?

NO

YES

S42 — STOP OUTPUT OF PWM SIGNAL FOR PREDETERMINED TIME INTERVAL.

(D)

S43 — SET PHASE SHIFT AMOUNT $T\varphi$ TO STEP-UP CALCULATION VALUE.
$Ton \leftarrow ILtarget \times L/Vin$
$T\varphi \leftarrow Ton+Tdead$

S44 — IN DETERMINATION PROCESS FOR STEP-UP UPPER LIMIT OF PHASE SHIFT AMOUNT $T\varphi$, $T\varphi > T\varphi maxbo$ ?

YES

NO

S45 — UPDATE CURRENT TARGET VALUE ILtarget
$ILtarget \leftarrow ILtarget+ILstep$
HOWEVER, WHEN $ILtarget > ILmax$,
THEN $ILtarget \leftarrow ILmax$

S46 — SET VALUE PHASE SHIFT AMOUNT $T\varphi$ TO STEP-UP UPPER LIMIT .
$T\varphi \leftarrow T\varphi maxbo$

(B)

Fig. 15

EP 4 429 093 A1

Fig. 16

```
STORAGE BATTERY        INSULATED DC-DC                    DC-AC INVERTER        ELECTRIC POWER
(EV ETC.)       ───    CONVERTER          ───────────    APPARATUS       ───   SYSTEM OR LOAD
   1                   APPARATUS                             3                     4
                          2

SOLAR BATTERY    ───   DC-DC CONVERTER    ───┘
   5                   APPARATUS
                          6
```

34

## INTERNATIONAL SEARCH REPORT

| International application No. |
| --- |
| **PCT/JP2022/039143** |

| A. | CLASSIFICATION OF SUBJECT MATTER |
| --- | --- |

*H02M 3/28*(2006.01)i
FI:   H02M3/28 B; H02M3/28 C

According to International Patent Classification (IPC) or to both national classification and IPC

| B. | FIELDS SEARCHED |
| --- | --- |

Minimum documentation searched (classification system followed by classification symbols)

H02M3/00-3/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2020-202708 A (MEIDENSHA CORP.) 17 December 2020 (2020-12-17)<br>paragraphs [0033]-[0106], fig. 1-6 | 1–6 |
| Y | JP 2019-149866 A (OMRON CORP.) 05 September 2019 (2019-09-05)<br>paragraphs [0024]-[0040], fig. 2-4 | 1–6 |
| Y | JP 2014-27826 A (MITSUBISHI ELECTRIC CORP.) 06 February 2014 (2014-02-06)<br>paragraphs [0023]-[0036], [0086]-[0089], fig. 12 | 2, 4–5 |
| Y | JP 2007-288941 A (SHARP CORP.) 01 November 2007 (2007-11-01)<br>paragraphs [0036]-[0059], [0073]-[0082], fig. 1, 2, 4 | 4-5 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 December 2022** | **10 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2022/039143**

| Patent document cited in search report | | | Publication date (day/month/year) | Patent family member(s) | Publication date (day/month/year) |
|---|---|---|---|---|---|
| JP | 2020-202708 | A | 17 December 2020 | (Family: none) | |
| JP | 2019-149866 | A | 05 September 2019 | (Family: none) | |
| JP | 2014-27826 | A | 06 February 2014 | (Family: none) | |
| JP | 2007-288941 | A | 01 November 2007 | US 2009/0086520 A1<br>paragraphs [0050]-[0075], [0091]-[0101], fig. 1, 2, 4<br>WO 2007/122849 A1<br>EP 2009778 A1 | |

Form PCT/ISA/210 (patent family annex) (January 2015)

**EP 4 429 093 A1**

**Patent documents cited in the description**

- JP 2017118806 A
- JP 2021078274 A